# EUROPÄISCHE PATENTANMELDUNG

(11) **EP 1 777 147 A1**
(43) Veröffentlichungstag der Anmeldung: **25.04.2007**
(21) Anmeldenummer: 05405588.4
(22) Anmeldetag: 18.10.2005
(51) Int. Cl.: B62D 29/04, B62D 25/06, B60R 13/02, B32B 27/00

(54) **Versteifungskörper**

(71) Anmelder: Alcan Technology & Management Ltd., 8212 Neuhausen am Rheinfall (CH)
(72) Erfinder: Behre, Kurt, 49078 Osnabrück (DE); Klenke, Detlev, 49134 Wallenhorst (DE); Walsch, Thomas, 49525 Lengerich (DE); Seidel, Siegfried, 49205 Hasbergen (DE)

(57) **Zusammenfassung**

Ein Versteifungskörper (10) weist eine biegsame Lelchtstoffplatte (12) mit wenigstens einer mit einer Oberfläche der Platte (12) verbundenen Deckschicht (14, 16) auf. Eine der Deckschichten (14) umfasst eine vliesartige Materialschicht. Beim Verkleben des Versteifungskörpers mit einer zu versteifenden Fläche schmiegt sich die vliesartige Materialschicht der zu versteifenden Fläche gut an und ermöglicht damit in der neutralen Phase der Klebeverbindung eine optimale kraftschlüssige Übertragung von Schubkräften, was zu einer erhöhten Biegefestigkeit der versteiften Fläche, beispielsweise einer Dachhaut, führt.

## Beschreibung

Die Erfindung betrifft einen Versteifungskörper mit einer biegsamen Leichtstoffplatte mit wenigstens einer mit einer Oberfläche der Platte verbundenen Deckschicht.

Zur Erhöhung der Belastbarkeit der Dachfläche eines Fahrzeugs wird die Dachaussenhaut vom Fahrzeuginnern her versteift. Mit der über Klebstoffraupen oder einen vollflächig aufgetragenen Klebstoff mit der Dachhaut verklebten Dachversteifung wird gleichzeitig eine Schalldämmung und Wärmeisolierung erreicht.

Eine aus der EP-B-0 825 066 bekannte Dachversteifung für Fahrzeuge besteht aus einer einseitig mit einer Deckschicht verbundenen Platte aus geschäumtem Kunststoff. Zur Herstellung dieser Dachversteifung wird zunächst eine beidseitig mit einer Deckschicht verbundene Platte aus geschäumtem Kunststoff hergestellt. Anschliessend wird die geschäumte Platte mittig in zwei einseitig mit einer Deckschicht versehene Platten gespalten und mit Übermass auf die Abmessungen der Dachhaut zugeschnitten. Eine einzelne Deckschicht wird ebenfalls mit Übermass auf die Abmessung der Dachhaut zugeschnitten und zusammen mit einer Klebstoffschicht zwischen der Schaumplatte und der einzelnen Deckschicht in einem der Wölbung und Kontur der Dachhaut entsprechenden Formwerkzeug auf die endgültige Form umgeformt und verklebt. Kurz vor Öffnung des Formwerkzeugs wird das Formteil zur passenden Dachversteifung ausgestanzt. Der geschäumte Kunststoff ist ein Polyurethanschaum, die Deckschichten bestehen aus Kraftlinern. Die zur Fertigung der Dachversteifung erforderlichen teuren Formwerkzeuge führen zu entsprechend hohen Endkosten.

Auch bei dem aus der WO-A-01/26 878 bekannten Verfahren zur Herstellung einer Dachversteifung für Fahrzeuge wird zunächst eine Platte aus geschäumtem Kunststoff mit beidseitig angeordneten Deckschichten hergestellt und diese anschliessend durch mittiges Spalten in zwei einseitig mit einer Deckschicht versehene Schaumplatten geschnitten. Die endgültige Formgebung der Platte zur Dachversteifung erfolgt hier durch direktes Verkleben der unbeschichteten Seite der Platte mit der Dachhaut. Bei diesem Fertigungsverfahren entfallen die teuren Formwerkzeuge. Die nur einseitige Belegung der Schaumplatte mit einer Deckschicht aus einem Kraftliner oder einem Vlies hat jedoch eine Verminderung der Steifigkeit zur Folge.

Der Erfindung liegt die Aufgabe zugrunde, einen Versteifungskörper der eingangs genannten Art zu schaffen, der im verklebten Zustand mit einer zu versteifenden Fläche bei gleicher Dimensionierung eine gegenüber herkömmlichen Versteifungskörpern erhöhte Anpassungsfähigkeit unter Beibehaltung der Biegesteifigkeitswerte aufweist.

Zur erfindungsgemässen Lösung der Aufgabe führt, dass eine der Deckschichten eine vliesartige Materialschicht umfasst.

Die Erfindung macht sich die Tatsache zunutze, dass die mit der vliesartigen Materialschicht versehene Seite des Versteifungskörper sich gut an die zu versteifende Fläche, z. B. an die Dachhaut eines Automobils, anschmiegt und damit in der neutralen Phase der Klebeverbindung eine optimale kraftschlüssige Übertragung von Schubkräften ermöglicht, was zu einer erhöhten Biegefestigkeit der versteiften Fläche, beispielsweise einer Dachhaut, führt.

Die vliesartige Materialschicht kann aus einem einzelnen Vlies aus Papier oder Kunststoff oder aus mehreren Vliesen aus Papier oder Kunststoff bestehen. Ein geeigneter Kunststoff ist beispielsweise Polyethylen, Polypropylen oder Polyethylenterephthalat.

Die Vliese können auch mit Kunststoff beschichtet sein. Papiervliese können beispielsweise eine Beschichtung aus Polyethylen, Polypropylen oder Polyethylenterephthalat als Wasserdampfsperre aufweisen. Anstelle einer Beschichtung mit einem Kunststofffilm können Papiervliese auch mit wasserabweisenden, flammhemmenden und/oder Schimmel- und Fäulnis verhindernden Stoffen imprägniert sein.

Bei einem bevorzugten Versteifungskörper umfasst eine der Deckschichten eine vliesartige Materialschicht und die zweite Deckschicht wenigstens eine Materialschicht mit einer Vielzahl von durch die Materialschicht gebildeten und von der Plattenoberfläche aufragenden Versteifungselementen.

Die Materialschicht der zweiten Deckschicht ist zur Bildung der Versteifungselemente bevorzugt gekreppt. d.h., die Versteifungselemente werden beim Kreppen der Materialschicht erzeugt.

Kreppungen erhöhen infolge der rechtwinklig zur Kreppung auftretenden Zunahme der Dicke des gekreppten Werkstoffes die Quersteifigkeit des Grundmaterials und führen damit zu einer besseren Biegefestigkeit des Versteifungskörpers.

Die gekreppte Materialschicht ist bevorzugt ein Krepppapier, eine gekreppte Kunststoff- oder Metallfolie oder eine gekreppte mehrschichtige Folie mit einzelnen Schichten aus einer oder mehreren Papierschichten, Kunststofffolien und/oder Metallfolien. Als Metallfolie eignet sich insbesondere eine Aluminiumfolie.

Die biegsame Leichtstoffplatte besteht bevorzugt aus geschäumtem Kunststoff, insbesondere aus einem Polyurethanschaum, vorzugsweise aus einem geschlossenzelligen Polyurethanschaum mit einem Raumgewicht von etwa 30 bis 55 g/m³.

Eine bevorzugte gekreppte Materialschicht besteht aus einer Krapppapierschicht, die unbeschichtet oder auch ein- oder beidseitig mit einem Kunststofffilm aus beispielsweise Polyethylen, Polypropylen oder Polyethylenterephthalat als Wasserdampfsperre beschichtet sein kann. Anstelle einer Beschichtung mit einem Kunststofffilm kann die Krepppapierschicht auch mit wasserabweisenden, flammhemmenden und/oder Schimmel- und Fäulnis verhindernden Stoffen imprägniert sein.

Die erfindungsgemässen Versteifungskörper können mit Vorteil überall dort eingesetzt werden, wo die Aussenhaut eines Bauteils vor Einbeulungen, die durch äussere Krafteinwirkungen auftreten, geschützt werden soll. Ein bevor zugter Einsatzbereich sind Dachversteifungen für Fahrzeuge, wobei auch Dachhimmel (Headliner), gegebenenfalls mit der Dachhautverstärkung kombiniert, mit den Verstärkungskörpern ausgestattet werden können. Weitere Anwendungen des erfindungsgemässen Versteifungskörpers sind die Aussteifung flächiger Beplankungen und Formkörper aus Blech oder Kunststoff aller Art, wie z.B. Motorhauben, Kühlschranktüren und weiterer gegen Eindrücken zu verstärkender Bauteile.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1 einen Querschnitt durch eine Dachversteifung;
- Fig. 2 einen Querschnitt durch die mit einer Dachhaut eines Fahrzeuges verklebte Dachversteifung von Fig. 1;
- Fig. 3 einen Querschnitt durch einen Teil der Dachversteifung von Fig. 1 in vergrösserter Darstellung;
- Fig. 4 eine Anlage zur Herstellung eines gekreppten Folienbandes.

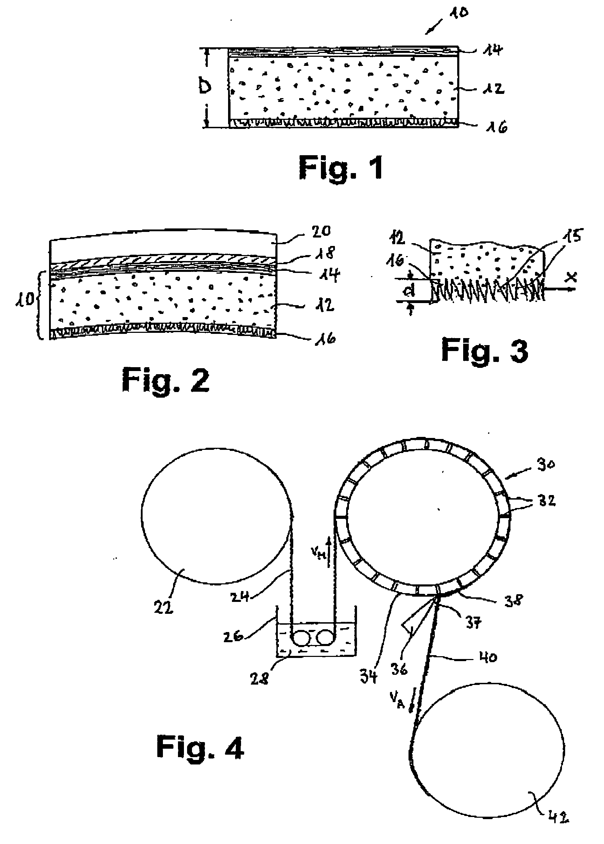

Eine Dachversteifung 10 besteht gemäss Fig. 1 aus einer Platte 12 aus geschäumtem Kunststoff, z.B. Polyurethanschaum, mit beidseitig angeordneten Deckschichten 14, 16.

Die auf der zur Verklebung mit der Dachhaut eines Fahrzeuges vorgesehenen Seite der Dachversteifung 10 angeordnete Deckschicht 14 besteht aus einer vliesartigen Materialschicht, die z. B. aus einzelnen Vliesen aus Papier zusammengesetzt ist. Die mit der vliesartigen Materialschicht versehene Seite der Dachhaut 10 schmiegt sich gut an die Dachhaut 10 an. Die auf der freien Seite der Dachversteifung 10 angeordnete Deckschicht 16 besteht beispielsweise aus einer gekreppten Materialschicht, wie z.B. Krepppapier. Die Gesamtdicke D der Dachversteifung 10 liegt typischerweise bei etwa 5 bis 10 mm.

Die Herstellung dieses Sandwichmaterials erfolgt üblicherweise in der Form von Bandmaterial in einer Doppelbandpresse, in der gleichzeitig mit dem Aufschäumen des Kunststoffes zum geschäumten Bandmaterial eine feste Verbindung mit den in Bandform zugeführten Deckschichten erzeugt wird. Die einzelnen Dachversteifungen werden vom Bandmaterial abgelängt und zu einem an die Dachhaut angepassten Formteil gestanzt.

Wie in Fig. 2 gezeigt, wird die Dachversteifung 10 mittels eines in Raupenform oder vollflächig aufgetragenen Klebstoffs 18 mit einer Dachhaut 20 eines in der Zeichnung nicht wiedergegebenen Fahrzeugs verklebt.

Aus dem in Fig. 3 dargestellten Teil der Dachversteifung 10 mit der freien Deckschicht 16 aus einem gekreppten Material, beispielsweise Krepppapier, welches von der Oberfläche der Schaumplatte 12 aufragende Versteifungselemente 15 bildet, ist die infolge der rechtwinklig zur Krepprichtung auftretenden Zunahme der Dicke d des gekreppten Werkstoffes erhöhte Quersteifigkeit des gekreppten Grundmaterials gegenüber einer nicht gekreppten Materialschicht ohne weiteres verständlich. Die in Längsrichtung x etwas verminderte Längssteifigkeit führt zu einer leichteren Verformbarkeit in dieser Richtung, wodurch die Dachversteifung problemlos ohne vorgängige Umformung in einem Formwerkzeug direkt mit der Dachhaut verklebt werden kann.

Während des Stanzvorgangs eingebrachte Rillen oder Nuten können zusätzlich in der Querrichtung versteifend wirksam werden und eine auch längs wirkende Verformungssteife bewirken.

Eine in Fig. 4 gezeigte Anlage zur Herstellung eines gekreppten Folienbandes 40 umfasst eine erste Wickelrolle 22 mit dem ungekreppten Folienband 24, ein Bad 26 mit flüssigem Gleitmittel 28 zur Benetzung des Folienbandes 24, eine zylinderförmige Vakuumtrommel 30 mit einer Vielzahl von an der Mantelfläche 34 der Vakuumtrommel 30 endenden Saugöffnungen 32, einen Rakel 36, dessen Blattspitze 37 im wesentlichen bis auf die Mantelfläche 34 reicht und sich über die gesamte Breite der Vakuumtrommel 30 erstreckt, und eine zweite Wickelrolle 42 zum Aufwickeln des gekreppten Folienbandes 40.

Beim Betrieb der Anlage wird das ungekreppte Folienband 24, beispielsweise eine Aluminiumfolie, von der ersten Wickelrolle 22 abgewickelt und nachfolgend durch das Bad 26 mit dem flüssigen Gleitmittel 28, beispielsweise Wasser, geführt. Das mit dem flüssigen Gleitmittel 28 benetzte Folienband 24 wird anschliessend an die Vakuumtrommel 30 herangeführt und liegt deren Mantelfläche 34 an. Die Vakuumtrommel 30 ist an eine in der Zeichnung nicht dargestellte Unterdruckquelle, z.B. eine Vakuumpumpe, angeschlossen, so dass im Trommelinnern gegenüber der Aussenatmosphäre ein Unterdruck herrscht. Über die an der Mantelfläche 34 endenden Saugöffnungen baut sich auch zwischen dem Folienband 24 und der Mantelfläche 34 ein Unterdruck auf, so dass das Folienband 24 der Mantelfläche 34 satt anliegt und an dieser festgesaugt wird.

In einem Staubereich 38 vor dem Rakel 36 staut sich das das mit dem Gleitmittel 28 benetzte Folienband 24 auf und wird gleichmässig gekreppt. Über die zweite Wickelrolle 42 wird das gekreppte Folienband 40 beim Rakel 36 von der Mantelfläche 34 der Vakuumtrommel 30 abgezogen und auf der zweiten Wickelrolle 42 aufgewickelt.

Der Grad der Kreppung des gekreppten Folienbandes 40 wird über die Rotationsgeschwindigkeiten der Vakuumtrommel 30 und der zweiten Wickelrolle 42 geregelt. Die Wickelrolle 42 dient hier gleichzeitig als Abzugseinrichtung für das gekreppte Folienband 40. Die Rotationsgeschwindigkeiten der Vakuumtrommel 30 und der zweiten Wickelrolle 42 werden so eingestellt, dass die Abzugsgeschwindigkeit v_{A}, mit der das gekreppte Folienband 40 von der Mantelfläche 34 der Vakuumtrommel 30 abgezogen wird, kleiner ist als die der Mantelgeschwindigkeit v_{M} entsprechende Laufgeschwindigkeit des ungekreppten Folienbandes 24. Je grösser die Differenz zwischen v_{M} und v_{A} ist, desto dichter wird die Kreppung des Folienbandes 24 im Staubereich 38 vor dem Rakel 36, was einem entsprechend höheren Kreppgrad entspricht.

Das auf der zweiten Wickelrolle aufgewickelte gekreppte Folienband 42 kann direkt als Deckschicht 14, 16 zur Herstellung eines Versteifungskörpers 10 mit einer biegsamen Leichtstoffplatte 12, wie sie beispielsweise für die vorstehend beschriebene Dachversteifung 10 verwendet wird, eingesetzt werden.

Wird mit der vorstehend beschriebenen Anlage ein aus einer Kunststofffolie oder aus einem mehrschichtigen, einen Kunststofffilm enthaltenden Laminat bestehendes Folienband gekreppt, so wird die Vakuumtrommel 30 so aufgeheizt, dass die Kunststofffolie oder der Kunststotffilm den zur Durchführung der Kreppung erforderliche Erweichungspunkt erreicht.

## Patentansprüche

1. Versteifungskörper mit einer biegsamen Leichtstoffplatte (12) mit wenigstens einer mit einer Oberfläche der Platte (12) verbundenen Deckschicht (14,16),
**dadurch gekennzeichnet, dass**
eine der Deckschichten (16) eine vliesartige Materialschicht umfasst.

2. Versteifungskörper nach Anspruch 1, **dadurch gekennzeichnet, dass** die vliesartige Materialschicht ein einzelnes Vlies aus Papier oder Kunststoff ist.

3. Versteifungskörper nach Anspruch 1, **dadurch gekennzeichnet, dass** die vliesartige Materialschicht aus mehreren Vliesen aus Papier oder Kunststoff besteht.

4. Versteifungskörper nach Anspruch 2 oder 3, **dadurch gekennzeichnet, dass** die Vliese mit Kunststoff beschichtet sind.

5. Versteifungskörper nach einem der Ansprüche 1 bis 4, **dadurch gekennzeichnet, dass** eine der Deckschichten (16) eine vliesartige Materialschicht und die zweite Deckschicht (14) eine Materialschicht mit einer Vielzahl von durch die Materialschicht gebildeten und von der Plattenoberfläche aufragenden Versteifungselementen (15) umfasst.

6. Versteifungskörper nach Anspruch 5, **dadurch gekennzeichnet, dass** die Versteifungselemente (15) durch Kreppen der Materialschicht gebildet sind.

7. Versteifungskörper nach Anspruch 6, **dadurch gekennzeichnet, dass** die gekreppte Materialschicht ein Krepppapier, eine gekreppte Kunststoff- oder Metallfolie oder eine gekreppte mehrschichtige Folie mit einzelnen Schichten aus einer oder mehreren Papierschichten, Kunststofffolien und/oder Metallfolien ist.

8. Versteifungskörper nach einem der Ansprüche 5 bis 7, **dadurch gekennzeichnet, dass** die biegsame Leichtstoffplatte (12) aus einem geschäumten Kunststoff, insbesondere aus einem Polyurethanschaum, vorzugsweise aus einem geschlossenzelligen Polyurethanschaum mit einem Raumgewicht von 30 bis 55 g/m³ besteht.

9. Versteifungskörper nach einem der Ansprüche 6 bis 8, **dadurch gekennzeichnet, dass** die gekreppte Materialschicht eine wenigstens einseitig mit einem Kunststofffilm beschichtete Krepppapierschicht ist.

10. Versteifungskörper nach einem der Ansprüche 6 bis 9, **dadurch gekennzeichnet, dass** die gekreppte Materialschicht eine mit wasserabweisenden, flammhemmenden und/oder Schimmel- und Fäulnis verhindernden Stoffen imprägnierte Krepppapierschicht ist.

11. Verwendung eines Versteifungskörpers nach einem der vorangehenden Ansprüche zur Versteifung von flächigen Beplankungen, Formkörpern und Bauteilen mit einer gegen Eindrücken zu verstärkenden Haut aus Blech oder Kunststoff.

12. Verwendung nach Anspruch 11 als Dachversteifung für Fahrzeuge.
